# EUROPÄISCHE PATENTANMELDUNG

(11) **EP 1 810 920 A1**
(43) Veröffentlichungstag der Anmeldung: **25.07.2007**
(21) Anmeldenummer: 06006818.6
(22) Anmeldetag: 31.03.2006
(51) Int. Cl.: B63H 5/125, B63H 20/00, B63H 21/17, H02K 11/04, H02K 7/14

(54) **Elektrischer Aussenbordmotor mit integriertem, elektronischem Umrichter**

(30) Priorität: 20.01.2006 DE 102006003027
(71) Anmelder: Torqeedo GmbH, 82319 Starnberg (DE)
(72) Erfinder: Böbel, Friedrich, Dr., 82547 Eurasburg (DE)
(74) Vertreter: Gellner, Bernd

(57) **Zusammenfassung**

Die Erfindung betrifft einen Außenbordantrieb mit einem von einem Umrichter (5) elektronisch angesteuerten Elektromotor (7), wobei der Außenbordantrieb ein Unterwasserteil umfasst, und wobei der Elektromotor (7) in dem Unterwasserteil angeordnet ist, und wobei der Umrichter (5) in dem Unterwasserteil angeordnet ist.

## Beschreibung

Die Erfindung betrifft ein Außenbordantrieb mit einem von einem Umrichter elektronisch angesteuerten Elektromotor, wobei der Außenbordantrieb einen Pylon umfasst, und wobei der Elektromotor in dem Pylon angeordnet ist.

Es ist bereits bekannt, den Elektromotor eines Elektro-Außenbordmotors in dem Pylon, das heißt in dem Unterwasserteil, des Außenbordantriebs unterzubringen. Insbesondere die bisher häufig als Bootsantrieb eingesetzten Asynchronmotoren sind relativ unempfindlich gegen Feuchtigkeit, so dass bei einem Wassereinbruch in den Pylon nicht sofort der Motor zerstört wird.

Elektronisch kommutierte Permanentmagnet erregte Synchronmotoren sind aufgrund ihres hohen Drehmoments für den Antrieb von Bootspropellern besonders geeignet. In solchen Motoren werden hohe Magnetfelddichten von etwa 1 T/cm²erzeugt. Auch Synchronmotoren werden teilweise im Pylon vorgesehen.

Das für den Lauf eines Synchronmotors notwendige Wechselfeld wird über eine elektronische Schaltung, im Folgenden als Umrichter bezeichnet, erzeugt. Der Umrichter eines elektronisch kommutierten Permanentmagnet erregten Synchronmotors wird bisher nicht im Pylon angeordnet, da aufgrund der beengten Platzverhältnisse und der dadurch bedingten unmittelbaren Nähe von Elektromotor und Umrichter befürchtet wurde, dass die hohen Magnetfelddichten die Steuerelektronik des Umrichters stören würde.

Zudem ist die Elektronik des Umrichters empfindlich gegen Wasser und würde bei einem Wassereinbruch in den Pylon schnell zerstört werden. Als Schutz gegen Feuchtigkeit und Wasser wird der Umrichter häufig in Kunstharz eingegossen und so gegen äußere Einflüsse abgekapselt. Eingegossene Umrichter können jedoch nicht im Pylon untergebracht werden, da hierfür das Platzangebot meist nicht ausreicht.

Aufgabe vorliegender Erfindung ist es, einen solchen Außenbordantrieb, der elektronisch kommutiert wird, zu verbessern.

Diese Aufgabe wird durch einen Außenbordantrieb mit einem von einem Umrichter elektronisch angesteuerten Elektromotor gelöst, wobei der Außenbordantrieb einen Pylon umfasst, und wobei der Elektromotor in dem Pylon angeordnet ist, und wobei erfindungsgemäß der Umrichter in dem Pylon angeordnet ist.

Die Verbindungsleitungen zwischen dem Umrichter und dem Elektromotor wirken als Antennen. Insbesondere bei Hochleistungsmotoren fließen hohe Ströme von teilweise mehr als 80 A. Werden diese Ströme von dem Umrichter schnell geschaltet, so müssen über die Verbindungsleitungen zwischen dem Umrichter und dem Elektromotor hohe steilflankige Ströme übertragen werden, die elektromagnetische Störungen hervorrufen.

Erfindungsgemäß werden nun der Elektromotor und der Umrichter in dem Pylon, das heißt in dem Unterwasserteil des Außenbordantriebs, untergebracht. Auf diese Weise werden die Verbindungsleitungen zwischen diesen sehr kurz gehalten. Die elektromagnetischen Störungen, die ansonsten bei solchen hohen steilflankigen. Strömen hervorgerufen werden, werden dadurch vermieden.

Es hat sich gezeigt, dass der negative Einfluss der magnetischen Felder des Elektromotors auf einen in dessen Nähe befindlichen Umrichter durch geeignete Auslegung der elektronischen Schaltungskomponenten des Umrichters im Wesentlichen ausgeschaltet werden kann.

Außerdem wird durch die Unterbringung des Elektromotors und des Umrichters im Pylon die Verlustwärme effektiv an das den Pylon umgebende Wasser abgegeben, so dass keine Gefahr einer Überhitzung des Elektromotors besteht. Es ist daher keine separate Luftkühlung, z. B. mittels eines Ventilators, notwendig.

Durch die erfindungsgemäß kurzen Verbindungsleitungen werden zudem deren Induktivität und deren Innenwiderstand minimiert. Dies trägt weiter dazu bei, die elektrischen Verluste zu minimieren.

Die erfindungsgemäße Anordnung von Elektromotor und Umrichter im Pylon ist insbesondere bei Elektromotoren, vor allem elektronisch kommutierten Synchronmotoren, von Vorteil, bei denen hohe Ströme fließen, insbesondere wenn Ströme von mehr als 20 A, bevorzugt mehr als 50 A, besonders bevorzugt mehr als 80 A fließen. Beim Schalten solch hoher Ströme können in den Verbindungsleitungen elektromagnetische Störungen hervorgerufen werden, die durch die erfindungsgemäß kurzen Leitungswege vermieden werden.

Die äußere Form und Größe des Pylons sind nach strömungstechnischen Gesichtspunkten ausgelegt. Elektromotor und Umrichter müssen daher so ausgeführt sein, dass sie in die vorgegebene Form des Pylons passen und möglichst einfach zu montieren sind. Es hat sich als vorteilhaft erwiesen, einen Trägerkörper vorzusehen, welcher mit einer zentralen Bohrung versehen ist, durch den eine einen Propeller tragende Welle gesteckt ist. An der Welle ist der Elektromotor angeschlossen. Der Umrichter weist eine zentrale Bohrung auf und wird ebenfalls auf die Welle gesteckt. Auf diese Weise ergibt sich eine kompakte und leicht montierbare Einheit.

Vorzugsweise werden der Umrichter und der Elektromotor auf derselben Seite des Trägerkörpers angeordnet. Das heißt, auf der einen Seite des Trägerkörpers sind der Elektromotor und der Umrichter auf die Welle gesteckt, auf der anderen Seite des Trägerkörpers kann gegebenenfalls noch ein Getriebe vorgesehen sein, um die Drehzahl des Elektromotors in gewünschter Weise herunter zu transformieren. Durch die unmittelbare Nähe von Elektromotor und Umrichter werden die elektrischen Verbindungen so kurz wie möglich gehalten.

Aus Herstellungs- und Servicegründen ist es besonders günstig, wenn in diesem Fall ein Deckel vorgesehen ist, der über den Elektromotor und den Umrichter gestülpt und mit dem Trägerkörper wasserdicht verbunden ist. Der Deckel bildet hierbei die äußere Form des Pylons. Bevorzugt ist der Deckel auf den Trägerkörper aufgeschraubt. Durch einfaches Abschrauben des Deckels von dem Trägerkörper sind so der Elektromotor und der Umrichter für Service- und Reparaturzwecke zugänglich.

Im Hinblick auf die Abdichtung gegen Wasser hat sich eine Klebeverbindung zwischen Deckel und Trägerkörper bewährt. Durch geeignete Wahl des Klebestoffes lässt sich die Klebeverbindung beispielsweise unter dem Einfluss von Wärme auch wieder lösen, wenn dies aus Reparaturgründen erforderlich sein sollte.

Auf der entgegengesetzten Seite des Trägerkörpers kann entweder unmittelbar der Propeller auf die Welle gesteckt sein oder ein Getriebe dazwischen geschaltet sein. In letzterem Fall ist von Vorteil ein weiterer Deckel vorgesehen, der von der Getriebeseite auf den Trägerkörper aufgeschraubt oder mit diesem anderweitig verbunden ist. Dieser Deckel besitzt dann einen Durchlass für die Welle.

Aus konstruktiven Gründen kann es aber auch günstig sein, den Umrichter und den Elektromotor auf verschiedenen Seiten des Trägerkörpers anzuordnen. Auch bei dieser Anordnung ist es von Vorteil, zwei Deckel vorzusehen, die von beiden Seiten mit dem Trägerkörper wasserdicht verbunden, insbesondere verklebt oder verschraubt, werden und die den Elektromotor, den Umrichter und gegebenenfalls weitere Elemente zum Beispiel ein Getriebe, aufnehmen.

Die Montage des Pytons stellt sich damit äußerst einfach dar: Zunächst wird durch die zentrale Bohrung des Trägerkörpers die Antriebswelle geschoben. Umrichter und, falls notwendig oder gewünscht ein Getriebe werden auf derselben Seite oder auf den beiden entgegengesetzten Seiten des Trägerkörpers auf die Welle gesteckt. Als nächstes wird der Elektromotor auf der Welle angebracht. Schließlich werden der oder die Deckel über die Einheit gestülpt und mit dem Trägerkörper verbunden. Damit ist der Pylon montiert und der Propeller an der Welle befestigt werden.

Die Figuren zeigen bevorzugte Ausführungsformen der Erfindung. Hierbei zeigen
- Figur 1: eine erfindungsgemäße Anordnung von Umrichter und Elektromotor im Pylon,
- Figur 2: eine alternative Ausführung der Erfindung und
- Figur 3: eine Detailansicht von Figur 1.

Der Außenbordantrieb besitzt ein Unterwasserteil oder Pylon, welches einen Träger 1 umfasst. Der Träger 1 ist mit einer zentralen Bohrung 2 zur Durchführung der einen Propeller 3 tragenden Welle 4 versehen. Ein Umrichter 5 ist ebenfalls mit einer zentralen Bohrung 6 versehen und wird auf die Welle 4 gesteckt, so dass dieser dem Träger 1 benachbart angeordnet ist. Anschließend wird ein als Synchronmotor ausgeführter Elektromotor 7 auf die Welle 4 gesetzt und elektrisch mit dem Umrichter 5 verbunden. Über den Elektromotor 7 und den Umrichter 5 wird ein Deckel 8 gestülpt und mit dem Träger 1 wasserdicht verbunden.

Auf der anderen Seite des Trägers 1 wird ein Getriebe 9 mit der Welle 4 verbunden. Das Getriebe 9 übersetzt die Drehzahl der Welle 4 und treibt eine Propellerrwelle 10 an, an der Propeller 3 befestigt ist. Das Getriebe 9 wird mittels eines Deckels 11 wasserdicht abgedeckt. Der Deckel 11 weist eine gegen Wasser abgedichtete Durchführung für die Welle 4 auf.

Zur Befestigung der beiden Deckel 8, 11 an dem Träger 1 besitzt der Träger 1 zwei Gewinde, auf die die Deckel 8, 11 aufgeschraubt werden. Die äußere Form des Pylons wird damit durch die Deckel 8, 11 und den Umfang des Trägers 1 vorgegeben.

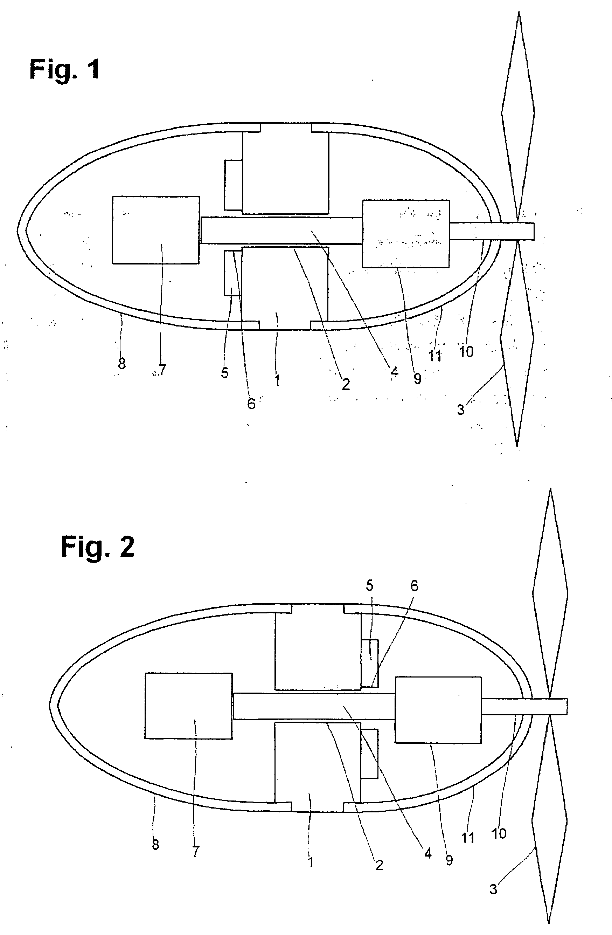

Figur 2 zeigt eine alternative Ausführung, wobei sich der Umrichter 5 und der Elektromotor 7 auf entgegengesetzten Seiten des Trägers 1 befinden. Ansonsten ist der Außenbordantrieb analog zu dem gemäß Figur 1 aufgebaut.

In beiden Ausführungsformen sind Umrichter und Elektromotor in den Pylon integriert, um die elektrischen Verbindungsleitungen zwischen diesen möglichst kurz zu halten und eine möglichst effektive Kühlung des Elektromotors zu erzielen.

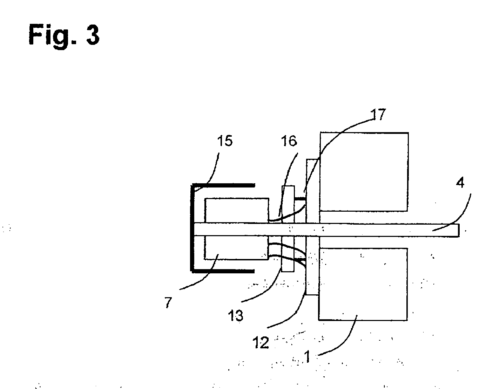

Figur 3 zeigt eine Detailansicht von Figur 1. Der Umrichter 5 besitzt eine Platine 12 mit den Leistungskomponenten der elektronischne Umrichterschaltung und eine Platine 13 mit der Steuereinheit. Die Leistungsplatine 12 trägt die Steuerplatine 13 mittels geeigneter Tragelemente 14.

Der Synchronmotor 7 besitzt eine außen laufende Glocke 15, an deren Innenseite die rotierenden Permanentmagneten angebracht sind. Mit der Glocke 15 ist die Antriebswelle 4 verbunden, die sich, wie oben beschrieben, durch den Trägerkörper 1 bis zum Propeller erstreckt. Der Synchronmotor 7 ist über äußerst kurze Anschlussleitungen 16 an den Umrichter 5, bzw. die Leistungsplatine 12, angeschlossen.

## Patentansprüche

1. Außenbordantrieb mit einem von einem Umrichter elektronisch angesteuerten Elektromotor, wobei der Außenbordantrieb einen Pylon umfasst, und wobei der Elektromotor in dem Pylon angeordnet ist, **dadurch gekennzeichnet, dass** der Umrichter in dem Pylon angeordnet ist.

2. Außenbordantrieb nach Anspruch 1, **dadurch gekennzeichnet, dass** der Pylon einen Trägerkörper umfasst, welcher mit einer zentralen Bohrung versehen ist, durch den eine einen Propeller tragende Welle gesteckt ist, welche mit dem Elektromotor verbunden ist, wobei der Umrichter eine zentrale Bohrung aufweist und auf die Welle gesteckt ist.

3. Außenbordantrieb nach Anspruch 2, **dadurch gekennzeichnet, dass** der Umrichter auf derselben Seite des Trägerkörpers angeordnet ist wie der Elektromotor.

4. Außenbordantrieb nach Anspruch 2, **dadurch gekennzeichnet, dass** der Umrichter und der Elektromotor auf verschiedenen Seiten des Trägerkörpers angeordnet sind.

5. Außenbordantrieb nach einem der Ansprüche 1 bis 4, **dadurch gekennzeichnet, dass** in dem Pylon ein Getriebe vorgesehen ist.
